Europäisches Patentamt

European Patent Office

Office européen des brevets

(11) Veröffentlichungsnummer: **0 463 278 A1**

# EUROPÄISCHE PATENTANMELDUNG

(21) Anmeldenummer: **90810995.2**

(22) Anmeldetag: **17.12.90**

(51) Int. Cl.5: **F16B 13/00**, F16B 13/13, F16B 25/02

(30) Priorität: **23.06.90 US 543333**

(43) Veröffentlichungstag der Anmeldung: **02.01.92 Patentblatt 92/01**

(84) Benannte Vertragsstaaten: **AT BE CH DE DK ES FR GB GR IT LI LU NL SE**

(71) Anmelder: **MUNGO BEFESTIGUNGSTECHNIK AG**
**Bornfeldstrasse 2**
**CH-4603 Olten(CH)**

(72) Erfinder: **Chen, Tsun-Pin**
**57 Lane 237 San Min Road**
**Chang Hwa(TW)**

(74) Vertreter: **Ouehl, Horst Max, Dipl.-Ing.**
**Patentanwalt Seestrasse 640 Postfach 90**
**CH-8706 Meilen/Zürich(CH)**

(54) **Schraubhülse.**

(57) Die Hülsenschraube (1) ist zum Einbohren in ein weiches Baumaterial, z.B. eine Gipswand geeignet, ohne dass für sie ein Aufnahmeloch vorgebohrt werden muss. Hierfür hat sie an ihrem vorderen, eine Spitze bildenden Ende ein Vorbohrelement (7) und ein verhältnismässig scharfes Schraubgewinde (4). Das Vorbohrelement (7) besteht aus zwei einander gegenüberliegend angeordneten und an der Spitze fest verbundenen Bohrteilen (8,9), so dass sich zwischen ihnen zwei Oeffnungen ((13) befinden, durch die Bohrspäne in den zentralen Aufnahmekanal der Hülsenschraube (1) abgeleitet werden.

FIG.2

Die Erfindung betrifft eine Schraubhülse für die Aufnahme eines schaftförmigen Befestigungselementes, mit einem einen spitzen Flankenwinkel aufweisenden, zum Eindrehen in weiches Baumaterial bestimmten Aussengewinde, einer der Halterung des Befestigungselementes und am hinteren Ende dem Eingriff eines Drehwerkzeuges dienenden Innenprofilierung und mit einem fräserartigen Vorbohrelement am vorderen Ende der Schraubhülse, wobei die Schraubenhülse an diesem vorderen Ende offen ist.

Eine Schraubhülse der genannten Art ist bekannt durch die EP-B-0 165 674. Diese bekannte Schraubhülse hat an ihrem voderen Ende ein langestrecktes Vorbohrelement, das gleich lang ist wie der mit Aussengewinde versehene Hülsenkörper, um zu erreichen, dass ein Aufnahmeloch bereits vorgebohrt ist, bevor das Aussengewinde in diesem zum Eingriff kommt. Eine Schrägfläche an diesem Vorbohrelement sowie ein Biege- oder Sollbruchbereich bewirken, dass es beim Einbringen eines schaftförmigen Befestigungselementes nach aussen weggebogen wird.

Durch die FR-A-836.734 und die US-A-3,911,781 sind weiterhin Einschraubhülsen bekannt, die in ein separat vorgebohrtes Loch eingeschraubt werden.

Ein zum Einschrauben in weiches oder lockeres Baumaterial geeignetes Schraubgewinde ist z.B. durch die CH-A-77 837 bekannt.

Ein zur Aufnahme eines schaftförmigen Befestigungsorganes bestimmte gewindelose Hülse, an deren vorderem Ende sich ein Vorbohrelement befindet ist durch die US-A-2,913,953 bekannt.

Der Erfindung liegt die Aufgabe zugrunde, eine Schraubhülse der genannten Art zu finden, die sich durch eine gute Spanableitung und eine gute Schneidwirkung seines Vorbohrelementes leicht in eine weiches Baumaterial, wie z.B. Gipsplatten, einschrauben lässt, deren Bohrelement formstabil ist und die sich verhältnismässig einfach als Massenprodukt herstellen lässt. Die Lösung dieser Aufgabe erfolgt erfindungsgemäss dadurch, dass das Vorbohrelement eine symmetrische Hülsenspitze bildet, indem es aus zwei vom Aussenumfang der Hülse in Richtung zueinander sich verjüngenden und am Spitzenende ineinander übergehenden Bohrteilen besteht, so dass sich zwischen diesen Bohrteilen Oeffnungen der Schraubhülse befinden. Vorteilhafte Ausgestaltungen der erfindungsgemässen Schraubhülse sind Gegenstand der abhängigen Patentansprüche.

Im folgenden wird die Erfindung anhand eines in der Zeichnung dargestellten Ausführungsbeispieles näher beschrieben. Es zeigt:

Fig.1    eine von oben gesehene perspektivische Gesamtdarstellung der Schraubhülse,

Fig.2    eine perspektivische Ansicht des unteren Bereichs der Schraubhülse nach Fig.1,

Fig.3    einen Axialschnitt der Schraubhülse nach Fig.1,

Fig.4    eine Ansicht in Achsrichtung des vorderen Endes der Schraubhülse nach Fig.1 und

Fig.5    eine Aufsicht auf das hintere Ende der Schraubhülse nach Fig.1 .

Wie die Darstellungen zeigen, hat die Schraubhülse 1 einen Hülsenkörper 2 mit im wesentlichen zylindrischer äusserer Umfangsfläche 3 und ein äusseres Schraubgewinde 4. Dieses erstreckt sich mit ungefähr zwei Gängen über nahezu die gesamte Länge der zylindrischen Umfangsfläche und endet kurz vor deren Endkante 5. Der Flankenwinkel des äusseren Schraubgewindes 4 ist verhältnismässig spitz und der Steigungswinkel verhältnismässig klein. Das somit eine starke Profilierung bildende Schraubgewinde 4 hat beispielsweise eine Aussendurchmesser, der doppelt so gross ist wie derjenige des Hülsenkörpers 2. Somit ergibt sich trotz der verhältnismässig geringen Länge des Hülsenkörpers 2 eine gute Verankerung im weichen Baumaterial. Ausserdem unterstützt dieses Schraubgewinde 4 die Vortriebskraft beim Einbohren der Schraubhülse 1 in ein Baumaterial.

Am hinteren Ende der Schraubhülse 1 ist ein Flansch 6 angeformt, durch den sich die vollständig in eine Wand eingeschraubte Schraubhülse 1 an der Wandoberfläche abstützt.

Damit die Schraubhülse 1 direkt in eine aus weiche Baumaterial bestehende Wand, z.B. eine Gipswand o.dgl. eingebohrt und eingeschraubt werden kann, d.h. ohne ein Loch vorbohren zu müssen, ist am vorderen Ende des Hülsenkörpers 2 ein kurzes doppelt wirkendes Vorbohrelement 7 angeformt, das durch zwei in symmetrischer Anordnung einander gegenüberstehende Bohrteile 8,9 gebildet ist, die die Form von dreieckförmigen Wandteilen eines Hohlkegels haben, die an ihrer Spitze 10 ineinander übergehen.

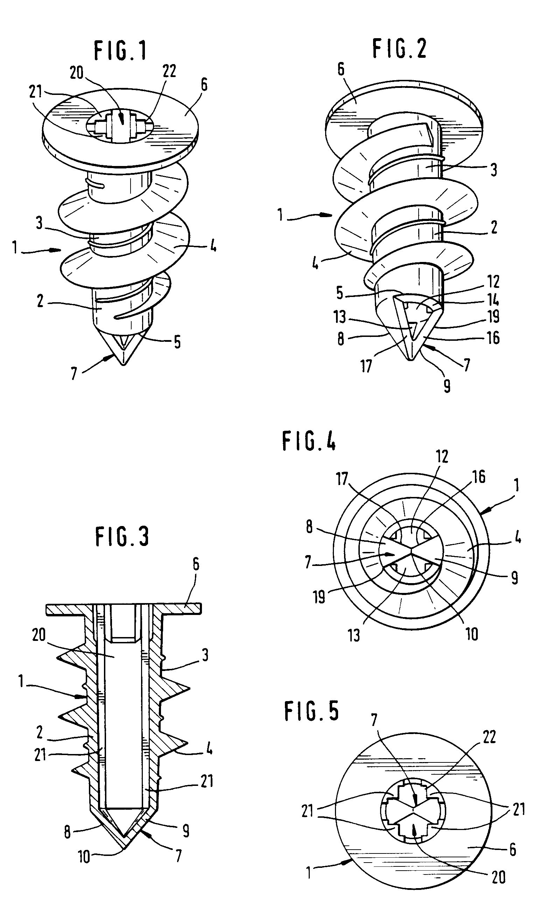

Ein solches Vorbohrelement 7 kann aus einem hohlkegelförmig spitz auslaufenden Ende des Hülsenkörpers 2 dadurch gebildet werden, dass in diesem zwei einander gegenüberliegende sektorförmige Oeffnungen 12,13 vorgesehen werden, so dass diese durch einen bogenförmigen bzw. ringsektorförmigen, in einer Ebene senkrecht zur Längsachse der Schraubhülse 1 verlaufenden Rand 14 sowie durch zwei im spitzen Winkel sich treffende Ränder 16,17 begrenzt sind, die in Ebenen parallel zur Längsachse der Schraubhülse 1 liegen. Vorteilhaft sind die Ränder 16,17 ausserdem angenähert radial nach innen gerichtet, wie die Fig.4 veranschaulicht, so dass die äussere Randkante 19 als Schneidkante wirkt und der beim Drehen der Schraubhülse 1 voreilende Rand 16 die anfallenden Späne in die Oeffnungen 12,13 hinein ableitet.

Unter Berücksichtigung der Wanddicke der Bohrteile 8,9 und ihrer in Umfangsrichtung des Hülsenkörpers 2 gemessenen grössten Breite ergibt sich eine ausreichende Vorbohrwirkung und ausreichende Grösse der spanableitenden Oeffnungen 12, 13, wenn die spitz sich verjüngenden Aussenflächen der beiden Bohrteile 8,9 unter einem Apexwinkel von weniger als 90° und vorzugsweise 60° treffen.

Die symmetrische Form der beiden Bohrteile 8,9 und ihre symmetrische Anordnung zueinander bewirkt, dass sich die Schraubhülse 1 beim Einbohren in ein Wandmaterial selbst zentriert. Ihre Verbindung miteinander im Apexbereich gibt den Bohrteilen eine gegenseitige Abstützung, so dass sie auch bei zusätzlicher Anwendung von Schlägen beim Einbringen der Schraubhülse in eine Wand nicht abbrechen können.

Es versteht sich, dass ein zur Halterung bzw. Verankerung in der Schraubhülse 1 bestimmtes schaftförmiges Befestigungselement, wie z.B. ein Schraubenbolzen, in passender Länge zu der Schraubhülse gewählt wird, so dass der Schraubenbolzen eine ausreichend tiefe Verankerung in dem Aufnahmekanal 20 findet, ohne an dem vorderen Bohrelement 7 einen Anschlag zu finden.

In dem Aufnahmekanal 20 der Schraubhülse 1 erstrecken sich z.B. achsparallel und zueinander parallel mehrere, beispielsweise vier, schmale im Querschnit winkelförmige Rippen 21, in denen sich das Gewinde eines darin zu verankernden Schraubenbolzens einschneiden kann. Ausserdem verengt sich der Aufnahmekanal 20 zumindest in seinem Anfangsbereich leicht konisch, so dass das Einführen und Einarbeiten eines schaftförmigen Befestigungselementes erleichtert wird.

Am hinteren Ende hat der Aufnahmekanal 20 ausserdem kreuzweise angeordnete Einschnitte 22 für den Eingriff eines üblichen Werkzeuges zum Drehen einer Schraube.

**Patentansprüche**

1. Schraubhülse für die Aufnahme eines schaftförmigen Befestigungselementes, mit einem einen spitzen Flankenwinkel aufweisenden, zum Eindrehen in weiches Baumaterial bestimmten Aussengewinde (4), einer der Halterung des Befestigungselementes und am hinteren Ende dem Eingriff eines Drehwerkzeuges dienenden Innenprofilierung (21,22) und mit einem fräserartigen Vorbohrelement (7) am vorderen Ende der Schraubhülse (1), wobei die Schraubenhülse an diesem vorderen Ende offen ist, dadurch gekennzeichnet, dass das Vorbohrelement (7) eine Hülsenspitze bildet, indem es aus zwei einander gegenüber angeordneten, vom Aussenumfang des Hülsenkörpers (2) in Richtung zueinander sich verjüngenden und an der äussersten Spitze ineinander übergehenden Bohrteilen (8,9) besteht, so dass sich zwischen diesen Bohrteilen Oeffnungen (12,13) der Schraubhülse (1) befinden.

2. Schraubhülse nach Anspruch 1, dadurch gekennzeichnet, dass sämtliche quer zur Längsachse der Schraubhülse (1) gerichteten Querschnittsformen der Bohrteile (8,9) Kreissektoren sind, so dass ihre axial gerichteten Begrenzungsflächen (16,17) radial nach innen verlaufen und durch eine radial äussere Schneidkante (19) begrenzt sind.

3. Schraubhülse nach Anspruch 1 oder 2, dadurch gekennzeichnet, dass die Aussenflächen der Bohrteile (8,9) Teil einer Kegelfläche sind.

4. Schraubhülse nach einem der Ansprüche 1 bis 3, dadurch gekennzeichnet, dass die Aussenflächen der beiden Bohrteile (8,9) zwischen sich einen Winkel von weniger als 90° einschliessen.

5. Schraubhülse nach Anspruch 4, dadurch gekennzeichnet, dass die Aussenflächen der beiden Bohrteile (8,9 zwischen sich einen Winkel von mindestens angenähert 60° einschliessen.

6. Schraubhülse nach einem der Ansprüche 1 bis 5, dadurch gekennzeichnet, dass die Bohrteile (8,9) aus Wandteilen eines Hohlkegels bestehen.

7. Schraubhülse nach einem der Ansprüche 1 bis 6, dadurch gekennzeichnet, dass der Aussendurchmesser ihres Aussengewindes (4) mindestens angenähert doppelt so gross ist wie der Aussendurchmesser des Hülsenkörpers (2).

FIG.1

FIG.2

FIG.3

FIG.4

FIG.5

## EINSCHLÄGIGE DOKUMENTE

EP 90810995.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A1 - 2 738 035</u><br>(K.K. YAMASHINA SEIKOSHO)<br>  * Fig. 9; Seite 9, letzter<br>    Absatz *<br>      -- | 1,3,4,<br>5 | F 16 B 13/00<br>F 16 B 13/13<br>F 16 B 25/02 |
| D,A | <u>EP - B1 - 0 165 674</u><br>(ILLINOIS TOOL WORKS INC.)<br>  * Fig. *<br>      -- | 1,7 | |
| D,A | <u>US - A - 3 911 781</u><br>(BAPPERT)<br>  * Zusammenfassung; Fig. 1 *<br>      ---- | 1 | |

| | RECHERCHIERTE SACHGEBIETE (Int. Cl.⁵) |
|---|---|
| | F 16 B 13/00<br>F 16 B 25/00 |

Der vorliegende Recherchenbericht wurde für alle Patentansprüche erstellt.

| Recherchenort | Abschlußdatum der Recherche | Prüfer |
|---|---|---|
| WIEN | 22-03-1991 | RIEMANN |